# EUROPÄISCHE PATENTSCHRIFT

(11) **EP 2 610 531 B1**
(45) Veröffentlichungstag und Bekanntmachung des Hinweises auf die Patenterteilung: **18.09.2019**
(21) Anmeldenummer: 12196411.8
(22) Anmeldetag: 11.12.2012
(51) Int. Cl.: F16H 61/24, F16H 63/30, F16H 63/38

(54) **SCHALTVORRICHTUNG FÜR EIN SCHALTGETRIEBE**
SHIFTING DEVICE FOR A GEARBOX
DISPOSITIF DE COMMANDE POUR UNE BOÎTE DE VITESSES

(30) Priorität: 29.12.2011 DE 102011057148; 02.02.2012 DE 102012100870
(43) Veröffentlichungstag der Anmeldung: 03.07.2013
(73) Patentinhaber: Getrag Ford Transmissions GmbH, 50735 Köln (DE)
(72) Erfinder: Hariri, Ahmad, 57587 Birken-Honigsessen (DE)
(74) Vertreter: Wagner Albiger & Partner Patentanwälte mbB

(56) Entgegenhaltungen:
- EP-A1- 1 150 048
- EP-A1- 1 757 845
- EP-A2- 0 795 701
- EP-B1- 1 036 962
- WO-A1-2010/124788
- WO-A1-2010/149295
- DE-A1-102009 058 023
- DE-A1-102010 034 228
- FR-A1- 2 884 888
- US-A1- 2009 293 657

## Beschreibung

Die Erfindung betrifft eine Schaltvorrichtung für ein Schaltgetriebe, wobei die Schaltvorrichtung eine Schaltwelle umfasst, die entlang einer Längsachse in axialer Richtung verschiebbar und um die Längsachse in Umfangsrichtung verdrehbar ist.

Aus der EP 1 036 962 B1 ist eine Schaltvorrichtung mit einer in axialer Richtung verschiebbaren und in Umfangsrichtung verdrehbaren Schaltwelle bekannt. Ein erstes Rastelement und eine erste Rastkontur wirken dabei derart zusammen, dass das durch eine erste Kraft gegen die erste Rastkontur gedrückte erste Rastelement für eine axiale Rastposition der Schaltwelle sorgt. Des Weiteren sind ein zweites Rastelement und eine zweite Rastkontur vorgesehen, wobei eine zweite Kraft in Form einer Federkraft das zweite Rastelement gegen die zweite Rastkontur drückt und dadurch die Schaltwelle in mindestens einer Rastposition in Umfangsrichtung hält. Die erste Kraft, mit der das erste Rastelement gegen die erste Rastkontur gedrückt wird, verursacht eine erste Reaktionskraft, die auf die Schaltwelle wirkt. Entsprechend verursacht die zweite Kraft, mit der das zweite Rastelement gegen die zweite Rastkontur gedrückt wird, eine zweite ebenfalls auf die Schaltwelle wirkende Reaktionskraft, wobei die erste Reaktionskraft und die zweite Reaktionskraft sich aufgrund der um 180° versetzten Rastelemente in radialer Richtung teilweise aufheben.

Sowohl das erste Rastelement als auch das zweite Rastelement werden in radialer Richtung in Richtung der Längsachse der Schaltwelle gedrückt. Die zweite Rastkontur, die im Zusammenspiel mit dem zweiten Rastelement für eine Verrastung in Umfangsrichtung sorgt, weist dabei einen vergleichsweise kleinen Wirkradius auf. Als Wirkradius soll der radiale Abstand der zweiten Rastkontur zur Längsachse der Schaltwelle verstanden werden (entsprechend lässt sich auch für die erste Rastkontur ein Wirkradius definieren). Durch den vergleichsweise kleinen Wirkradius muss die zweite Rastkontur zur Einstellung der gewünschten Rastkräfte fein ausgearbeitet sein, wobei die Fertigungstoleranzen vergleichsweise gering sind. Um einen bestimmten Drehmomentverlauf beim Rotieren der Welle einzustellen, muss die Federkraft, die das zweite Rastelement gegen die zweite Rastkontur drückt, recht hoch gewählt werden. Weist das als Kugel ausgebildete Rastelement einen kleinen Kugeldurchmesser auf, kann es zu unzulässig hohen Flächenpressungen kommen.

Die WO 2010/149195 A1 und DE 10 2009 058 023 A1 zeigen ebenfalls jeweils gattungsgemäße Schaltvorrichtung mit einer axialer verschiebbaren und in Umfangsrichtung verschiebbaren Schaltwelle. Zur axialen Rastierung und zu einer Rastierung in Umfangsrichtung sind ein erstes Rastelement und ein zweites Rastelement vorgesehen, die jeweils in Richtung der Schaltwelle gegen eine zugehörige Rastkontur drücken.

Der Erfindung liegt daher die Aufgabe zugrunde, eine Schaltvorrichtung für ein Schaltgetriebe bereitzustellen, die eine einfache und angenehme Betätigung des Schaltgetriebes ermöglicht und deren Herstellung vereinfacht wird.

Die der Erfindung zugrunde liegende Aufgabe wird mit der Merkmalskombination gemäß Anspruch 1 gelöst. Bevorzugte Ausführungsbeispiele der Erfindung können den Unteransprüchen entnommen werden.

Die Schaltvorrichtung gemäß Anspruch 1 zeichnet sich dadurch aus, dass ein mittlerer Wirkradius der zweiten Rastkontur und ein mittlerer Wirkradius der ersten Rastkontur unterschiedlich groß sind wobei ein Quotient aus dem mittleren Wirkradius der zweiten Rastkontur und aus dem mittleren Wirkradius der ersten Rastkontur Werte annimmt, die kleiner als 0,8 oder größer als 1,2 sind. In einem bevorzugten Ausführungsbeispiel ist der Quotient größer als 1,5 oder gar größer als 2. Beispielsweise ein Quotient gleich 2 bedeutet, dass der mittlere Wirkradius der zweiten Rastkontur doppelt so groß wie der mittlere Wirkradius der ersten Rastkontur ist.

Das erste Rastelement wird gegen die erste Rastkontur gedrückt, wobei aufgrund des Verlaufs oder der Gestalt der Rastkontur der Abstand der Längswelle der Schaltwelle zu einem Kontaktpunkt oder einer Summe von Kontaktpunkten (im Folgenden vereinfacht: Kontaktpunkt) variiert. Der mittlere Wirkradius der ersten Rastkontur stellt dabei den Mittelwert der Abstände der Kontaktpunkte zur Längsachse dar, die sich bei den unterschiedlichen axialen Positionen der Schaltwelle ergeben können. Der mittlere Wirkradius der zweiten Rastkontur definiert sich in analoger Weise. Auch hier werden die Abstände aller möglichen Kontaktpunkte zwischen zweiter Rastkontur und zweitem Rastelement gemittelt, um den mittleren Wirkradius bestimmen zu können.

Dadurch, dass der mittlere Wirkradius der zweiten Rastkontur deutlich größer ist als der mittlere Wirkradius der ersten Rastkontur, ist der Einfluss von Fertigungstoleranzen geringer. Durch den größeren Wirkradius muss die Rastkontur nicht so fein gearbeitet sein, so dass das zweite Rastelement größer ausgebildet sein kann, wodurch die Flächenpressung zwischen Rastkontur und Rastelement reduziert werden kann.

Ein weiterer Vorteil des größeren mittleren Wirkradius der zweiten Rastkontur besteht darin, dass für einen bestimmten Drehmomentverlauf in Umfangsrichtung, wenn also die Schaltwelle um die Längsachse in Umfangsrichtung verdreht werden soll, eine kleinere Kraft notwendig ist, mit der das zweite Rastelement gegen die zweite Rastkontur gedrückt wird. Da der Wirkradius als Faktor in das Drehmoment eingeht, können durch größere Wirkradien größere Drehmomente erreicht werden, oder, wenn bestimmte Drehmomentwerte vorgegeben sind, die Kraft reduziert werden, mit der das zweite Rastelement gegen die zweite Rastkontur gedrückt wird. Dies reduziert die Flächenpressung weiter. Auch reduzieren sich Reibungskräfte zwischen zweitem Rastelement und zweiter Rastkontur, wenn beispielsweise die Schaltwelle in axialer Richtung verschoben wird.

Zudem lässt die Erfindung bei einer Vorgabe, dass sich die auf die Schaltwelle wirkenden Reaktionskräfte möglichst aufheben sollen, mehr Spielraum für die Reduktion der Kraft, mit der das erste Rastelement gegen die erste Rastkontur gedrückt wird, was die Reibung zwischen erster Raskontur und dem ersten Rastelement senkt. Auch lassen sich insgesamt die auf die Schaltwelle wirkenden/verbleibenden Reaktionskräfte reduzieren, was sich günstig auf die Lagerreibung auswirkt, die bei Bewegung der Schaltwelle zu überwinden ist.

Die zweite Rastkontur kann ortsfest angeordnet sein. Die ortsfeste Anordnung der zweiten Rastkontur bezieht sich dabei auf die bewegbare Schaltwelle.

Die erste Rastkontur bewegt sich in einem bevorzugten Ausführungsbeispiel zumindest in axialer Richtung mit der Schaltwelle. In axialer Richtung der Schaltwelle gesehen ist somit das erste Rastelement ortsfest angeordnet. Bedingt durch die Ausgestaltung der ersten Rastkontur jedoch ist eine Bewegung des ersten Rastelements in radialer Richtung vorgesehen.

Die auf das erste Rastelement wirkende erste Kraft und die auf das zweite Rastelement wirkende zweite Kraft können in einer sich senkrecht zur Längsachse der Schaltwelle erstreckenden Ebene liegen. Damit können mögliche Kippmomente, verursacht durch auf die Schaltwelle wirkende Reaktionskräfte minimiert oder gar vollständig ausgeschlossen werden.

In einem bevorzugten Ausführungsbeispiel sind die erste Reaktionskraft und die zweite Reaktionskraft in Umfangsrichtung versetzt und greifen mit einem eingeschlossenen Umfangswinkel von 160° - 180° an der Schaltwelle an. Vorausgesetzt, dass die erste Reaktionskraft und die zweite Reaktionskraft im Betrag gleich groß sind und einen Umfangswinkel von 180° einschließen, kommt es in radialer Richtung gesehen zu einer vollständigen Kompensation der auf die Schaltwelle wirkenden Reaktionskräfte. Von Umfangswinkel gleich 180° abweichende Umfangswinkel (z.B. 168°- 172°) haben den Vorteil, dass die Schaltwelle durch eine Resultierende aus der ersten Reaktionskraft und der zweiten Reaktionskraft in eine definierte Lage gedrückt wird. Aufgrund der nahezu vollständigen Kompensation von erster und zweiter Reaktionskraft ist jedoch die resultierende Kraft recht gering.

In einem bevorzugten Ausführungsbeispiel führt eine axiale Verschiebung der Schaltwelle zu einem Auswählen einer Schaltgasse. Eine Rotation der Schaltwelle in einer mit der ausgewählten Schaltgasse korrespondierenden axialen Position führt dann zu dem Einlegen eines Gangs des Schaltgetriebes. Jedoch ist es auch möglich, dass durch die Rotation der Schaltwelle eine Schaltgasse ausgewählt wird, wobei dann durch axiale Verschiebung der Schaltwelle innerhalb dieser Schaltgasse ein Gang eingelegt werden kann.

Die erste Kraft kann in radialer Richtung zur Längsachse der Schaltwelle weisen, während die zweite Kraft in radialer Richtung von der Längsachse wegweist. Erste und zweite Kraft, die vorzugsweise Federkräfte sind, weisen in eine Richtung, wenn deren an der Schaltwelle angreifenden Reaktionskräfte um 180 ° versetzt sind. Insbesondere bei größeren Quotienten (Wirkradius der zweiten Rastkontur zu Wirkradius der ersten Rastkontur) ist es vorteilhaft, wenn das zweite Rastelement radial nach außen gegen die zweite Rastkontur gedrückt wird.

Die Schaltwelle kann als Rohrkörper (oder als Hohlwelle) ausgebildet sein, der/die eine innere Welle umschließt in radialer Richtung umschließt. Der Rohrkörper und die innere Welle sind dabei vorzugsweise koaxial zueinander angeordnet. Die innere Schaltwelle kann einen Mitnehmer aufweisen, der sich radial nach außen erstrecken kann und in einer Aussparung des Rohrkörpers sitzt. Der Mitnehmer ist vorzugsweise in Umfangsrichtung im Wesentlichen spielfrei in der Aussparung angeordnet, während er in axialer Richtung innerhalb der Aussparung bewegt werden kann. Somit ist es möglich, den Rohrkörper in axialer Richtung zu bewegen, ohne dass dabei die innere Welle ebenfalls in axialer Richtung bewegt werden muss. Somit kommt es zu einer Entkopplung von etwaigen bewegten Massen, die bei Drehung der inneren Welle und damit des Rohrkörpers zwar bewegt werden, bei einer axialen Verschiebung des Rohrkörpers jedoch nicht.

Anhand eines in der Zeichnung dargestellten Ausführungsbeispiels wird die Erfindung näher erläutert. Es zeigen:
- Figur 1: schematisch im Querschnitt eine erfindungsgemäße Schaltvorrichtung; und
- Figur 2: in perspektivischer Darstellung (teilweise weggebrochen) die Schaltvorrichtung der Figur 1.

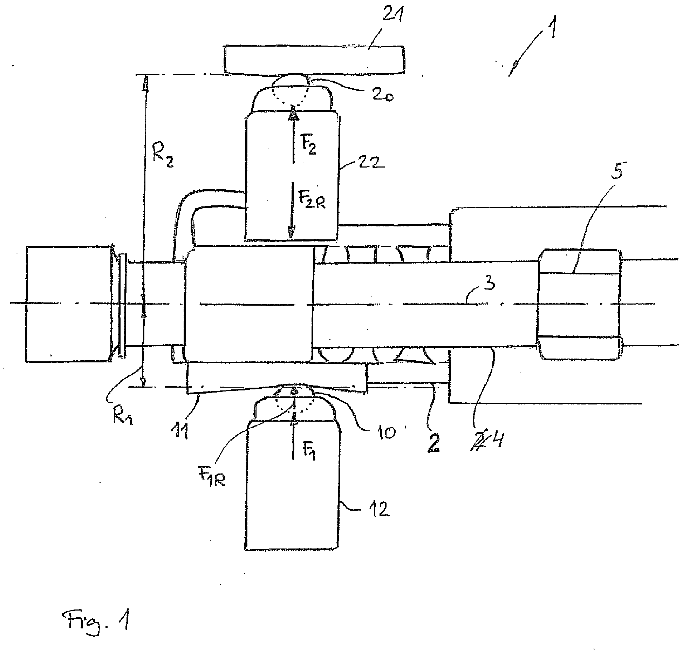

Figur 1 zeigt eine Schaltvorrichtung, die in ihrer Gesamtheit mit 1 bezeichnet wird. Mit der Schaltvorrichtung 1 lassen sich Gänge in einem Schaltgetriebe einlegen. Die Schaltvorrichtung 1 umfasst eine Schaltwelle 2 mit einer Längsachse 3. Die Schaltwelle 2 ist entlang der Längsachse 3 verschiebbar. Darüber hinaus lässt sie sich um die Längsachse in Umfangsrichtung verdrehen. Die Schaltwelle 2 ist hier als Rohrkörper ausgebildet, die koaxial zu einer inneren Welle 4 angeordnet ist. Mit der inneren Welle 4 ist drehfest ein Mitnehmer 5 verbunden, der für eine drehfeste, aber in axialer Richtung bewegliche Verbindung von Schaltwelle 2 bzw. Rohrkörper und innere Welle 4 sorgt. Auf das Zusammenspiel von Schaltwelle 2 und innerer Welle 4 wird später noch eingegangen.

Ein erstes Rastelement in Form einer Kugel 10 drückt gegen eine erste Rastkontur 11. Die Rastkontur 11 ist dabei an der Schaltwelle 2 befestigt, so dass eine axiale Verschiebung der Schaltwelle 2 zu einer ebenfalls gleichsinnig gearteten axialen Verschiebung der Rastkontur 11 führt. Das erste Rastelement bzw. die Kugel 10 wird mit einer Kraft F₁ gegen die Rastkontur 11 gedrückt. Eine Rastiervorrichtung 12, die zumindest in axialer Richtung der Längsachse 3 ortsfest angeordnet ist, sorgt für die Kraftbeaufschlagung und Positionierung des ersten Rastelements 10. Die erste Kraft F₁ soll die Kraft einer Schraubenfeder (nicht dargestellt) sein, die mit einem stirnseitigen Ende an dem ersten Rastelement 10 anliegt. Wird nun die Schaltwelle 2 in axialer Richtung verschoben, so verursacht das Zusammenwirken von Rastelement 10 und Rastkontur 11, dass das Rastelement 10 gegen die Federkraft F₁ in die Rastierung 12 gedrückt wird. Umgekehrt, in einer axialen Position der Schaltwelle 2, die von der in Figur 1 gezeigten axialen Position abweicht, bewirkt die Federkraft F₁ mit der Rastkontur 11, dass die Schaltwelle 2 in Richtung der in Figur 1 dargestellten axialen Position gedrückt wird. Die in Figur 1 dargestellte axiale Position stellt somit eine axiale Rastposition dar, in der die Kraft F₁ auf das Rastelement 10 ein Minimum einnimmt, welches zumindest ein lokales Minimum darstellt.

In Figur 1 ist auch eine Kraft F_{1R} eingezeichnet, die die Reaktionskraft darstellen soll, die durch die erste Kraft F₁ auf die Schaltwelle 2 wirkt. Die Reaktionskraft F_{1R} fällt dabei betraglich und bezüglich Richtung mit der ersten Kraft F₁ zusammen.

Für eine Rastierung in Umfangsrichtung, wenn also die Schaltwelle 2 um ihre Längsachse 3 rotiert werden soll, sorgt das Zusammenspiel von einem zweiten Rastelement 20 und einer zweiten Rastkontur 21. Das zweite Rastelement 20 in Form einer Kugel wird von einer Rastierung 22 gehalten. Eine innerhalb der Rastierung 22 angeordnete Schraubenfeder drückt das zweite Rastelement 20 mit einer Kraft F₂ gegen die Rastierung 21. Die Kraft F₂ bewirkt dabei eine Reaktionskraft, eine sogenannte zweite Reaktionskraft F_{2R}, die gegen die Schaltwelle 2 drückt. Aufgrund der entgegengesetzt angeordneten Anordnung von Rastierung 12 und Rastierung 22 heben sich die auf die Schaltwelle 2 wirkenden Reaktionskräfte F_{1R} und F_{2R} vollständig auf, vorausgesetzt, deren Beträge sind gleich und sie stehen sich genau um 180° versetzt gegenüber.

Zumindest in Umfangsrichtung gesehen ist die zweite Rastkontur 21 gegenüber der Schaltwelle 2 ortsfest angeordnet. Die Rastkontur 21 ist dabei so ausgelegt, dass zumindest in einem Drehwinkel der Schaltwelle 2 die Kraft F₂ ein lokales Minimum erfährt, wodurch dann durch das Zusammenspiel von zweitem Rastelement 20 und Rastkontur 21 eine Rastposition in Umfangsrichtung definiert ist.

Figur 1 ist weiter zu entnehmen, dass ein wirksamer Wirkradius R₁ der ersten Rastkontur 11 deutlich kleiner als ein mittlerer Wirkradius R₂ der zweiten Rastkontur 21 ist. Der Quotient R₂/R₁ beträgt in dem Ausführungsbeispiel der Figur 1 ungefähr 3.

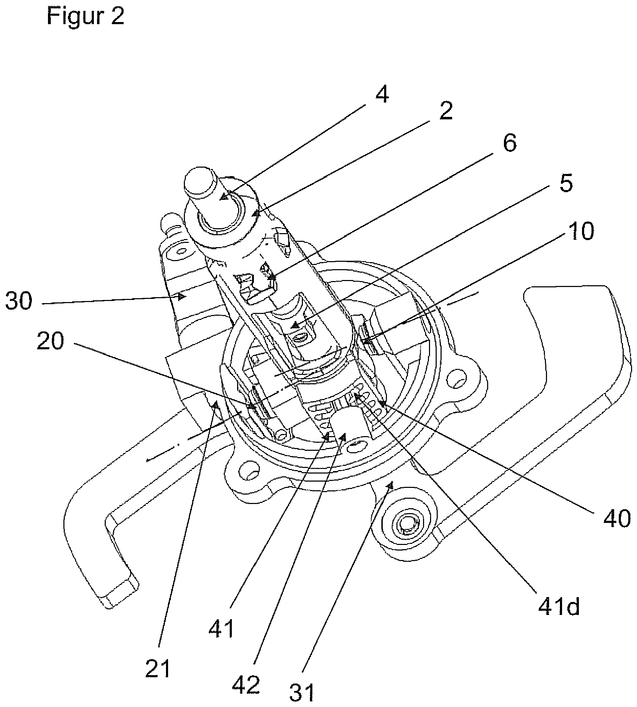

Figur 2 zeigt die Schaltvorrichtung 1 in perspektivischer Ansicht. Eine Bewegung eines Schalthebel 30 führt zu einer axialen Verschiebung der Schaltwelle 2. Eine Bewegung eines Schalthebels 31 sorgt dafür, dass sich die innere Welle 4 und über den Mitnehmer 5 die Schaltwelle 2 bzw. der Rohrkörper dreht. Figur 2 zeigt den Mitnehmer 5, Figur 2 zeigt jedoch nicht die Aussparung im Rohrkörper, in der der Mitnehmer 5 in Umfangsrichtung spielfrei sitzt, so dass eine Rotation der inneren Welle zu einer Rotation des Rohrkörpers 2 führt. Figur 2 legt vielmehr durch einen weggeschnitten Abschnitt im Rohrkörper 2 die innere Welle 4 und den Mitnehmer 5 frei. Der weggeschnittene Abschnitt entspricht dabei nicht der Aussparung, in der der Mitnehmer 5 sitzt.

Der Kraftfluss vom Schalthebel 31 auf die Schaltwelle 2 erfolgt, wie oben schon ausgeführt, durch die innere Welle 4 und den Mitnehmer 5. Wird der Schalthebel 30 betätigt, verschiebt sich in axialer Richtung lediglich Schaltwelle 2, während die innere Welle 4 ihre axiale Lage nicht ändert. Wird die Schaltwelle 2 oder der Rohrkörper axial verschoden oder (über die innere Welle 4) gedreht, so bewegt sich entsprechend ein am Umfang des Rohrkörpers vorgesehener Schaltfinger 6. Dieser Schaltfinger 6 kann je nach axialer Lage in unterschiedliche Schaltgabeln (nicht dargestellt) greifen. Durch Rotation der Rohrkörpers lässt sich dann die in Eingriff stehende Schaltgabel bewegen, wodurch ein Gang des Schaltgetriebes eingelegt werden kann.

Die strichpunktierten Linien in Figur 2, die die Wirkrichtung der Kräfte F₁ und F₂ darstellen sollen, mit denen die Rastkörper 10, 20 gegen die jeweiligen Raskonturen 11, 21 gedrückt werden, machen deutlich, dass die Kräfte F₁, F₂ bzw. ihre Reaktionskräfte F_{1R}, F_{2R} nicht genau um 180° versetzt an der Schaltwelle 2 ansetzen. Dies führt zu einer definierten resultierenden Kraft auf die Schaltwelle 2 und somit zu einer definierten Lagen der Schaltwelle 2 innerhalb ihrer Lagerung.

Die Schaltvorrichtung 1 umfasst des Weiteren eine innere Schaltkulisse 40 mit vier Schaltgassen 41. Ein Schaltstift 41 greift in die innere Schaltkulisse 41 und befindet sich in einer äußeren Schaltgasse 41d. Durch Rotation der Schaltwelle 2 bewegt sich der Schaltstift 42 innerhalb dieses Schaltgasse 41d. Die Endpositionen des Schaltstifts 42 in der Schaltgasse 41d korrespondieren dann mit eingelegten Gängen des Schaltgetriebes.

### Bezugszeichenliste

- 1: Schaltvorrichtung
- 2: Schaltwelle/Rohrkörper
- 3: Längsachse
- 4: Innere Welle
- 5: Mitnehmer
- 6: Schaltfinger

- 10: erstes Rastelement
- 11: erste Rastkontur
- 12: Rastierung

- 20: zweites Rastelemement
- 21: zweite Rastkontur
- 22: Rastierung

- 30: Schalthebel
- 31: Schalthebel

- 40: innere Schaltkulisse
- 41: Schaltgasse
- 42: Schaltstift

## Patentansprüche

1. Schaltvorrichtung (1) für ein Schaltgetriebe, umfassend
- eine Schaltwelle (2) mit einer Längsachse (3), wobei die Schaltwelle (2) entlang der Längsachse (3) in axialer Richtung verschiebbar und um die Längachse (3) in Umfangsrichtung verdrehbar ist,
- ein erstes Rastelement (10) und eine erste Rastkontur (11), wobei eine erste Kraft das erste Rastelement (10) gegen die erste Rastkontur (11) drückt und dadurch die Schaltwelle (2) in mindestens einer axialen Rastposition gehalten wird,
- ein zweites Rastelement (20) und eine zweite Rastkontur (21), wobei eine zweite Kraft das zweite Rastelement (20) gegen die zweite Rastkontur (21) drückt und dadurch die Schaltwelle (2) in mindestens einer Rastposition in Umfangsrichtung gehalten wird,
wobei die erste Kraft eine erste auf die Schaltwelle (2) wirkende Reaktionskraft und die zweite Kraft eine zweite auf die Schaltwelle (2) wirkende Reaktionskraft verursachen, wobei die erste Reaktionskraft und die zweite Reaktionskraft sich in radialer Richtung zumindest teilweise aufheben,
**dadurch gekennzeichnet, dass** ein Quotient aus einem mittleren Wirkradius der zweiten Rastkontur (21) und aus einem mittleren Wirkradius der ersten Rastkontur (11) kleiner 0,8 oder größer 1,2 ist, wobei der mittlere Wirkradius der ersten Rastkontur einen Mittelwert der Abstände der Kontaktpunkte zwischen dem ersten Rastelement (10) und der ersten Rastkontur (11), zur Längsachse (3) der Schaltwelle (2) darstellt, die sich bei unterschiedlichen axialen Positionen der Schaltwelle (2) ergeben können, und wobei der mittlere Wirkradius der zweiten Rastkontur einen Mittelwert der Abstände der Kontaktpunkte zwischen dem zweiten Rastelement (20) und der zweiten Rastkontur (21), zur Längsachse (3) der Schaltwelle (2) darstellt, die sich bei unterschiedlichen Positionen der Schaltwelle (2) in Umfangsrichtung ergeben können.

2. Schaltvorrichtung (1) nach Anspruch 1, **dadurch gekennzeichnet, dass** der Quotient größer als 2 ist.

3. Schaltvorrichtung (1) nach Anspruch 1 oder 2, **dadurch gekennzeichnet, dass** die zweite Rastkontur (21) ortsfest angeordnet ist.

4. Schaltvorrichtung (1) nach einem der Ansprüche 1 bis 3, **dadurch gekennzeichnet, dass** sich die erste Rastkontur (10) zumindest in axialer Richtung mit der Schaltwelle (2) bewegt.

5. Schaltvorrichtung (1) nach einem der Ansprüche 1 bis 4, **dadurch gekennzeichnet, dass** die auf das erste Rastelement (10) wirkende erste Kraft und die auf das zweite Rastelement (20) wirkende zweite Kraft in einer sich senkrecht zur Längsachse (3) erstreckenden Ebene liegen.

6. Schaltvorrichtung (1) nach einem der Ansprüche 1 bis 5, **dadurch gekennzeichnet, dass** die erste Reaktionskraft und die zweite Reaktionskraft in Umfangsrichtung versetzt sind und mit einem eingeschlossenen Umfangswinkel von 160 bis 180 Grad an der Schaltwelle angreifen.

7. Schaltvorrichtung (1) nach einem der Ansprüche 1 bis 6, **dadurch gekennzeichnet, dass** durch eine axiale Verschiebung der Schaltwelle (2) eine Schaltgasse auswählbar ist und durch eine Rotation ein Gang des Schaltgetriebes einlegbar ist.

8. Schaltvorrichtung (1) nach einem der Ansprüche 1 bis 7, **dadurch gekennzeichnet, dass** die Schaltwelle (2) als Rohrkörper ausgebildet ist, der eine innere Welle (4) umschließt.

9. Schaltvorrichtung (1) nach Anspruch 8, **dadurch gekennzeichnet, dass** die innere Welle (4) einen Mitnehmer (5) aufweist, der in einer Aussparung des Rohrkörpers in Umfangsrichtung im Wesentlichen spielfrei sitzt und in axialer Richtung bewegbar angeordnet ist.

## Claims

1. Shifting device (1) for a gearbox, comprising
- a selector shaft (2) with a longitudinal axis (3), wherein the selector shaft (2) is displaceable along the longitudinal axis (3) in axial direction and is rotatable about the longitudinal axis (3) in circumferential direction,
- a first catching element (10) and a first catching contour (11), wherein a first force pushes the first catching element (10) against the first catching contour (11) and in this way the selector shaft (2) is held in at least one axial catching position,
- a second catching element (20) and a second catching contour (21), wherein a second force pushes the second catching element (20) against the second catching contour (21) and in this way the selector shaft (2) is held in at least one catching position in circumferential direction,
wherein the first force causes a first reaction force acting on the selector shaft (2) and the second force causes a second reaction force acting on the selector shaft (2), wherein the first reaction force and the second reaction force at least partly cancel one another out in radial direction,
**characterised in that** a quotient of an average effective radius of the second catching contour (21) and of an average effective radius of the first catching contour (11) is smaller than 0.8 or greater than 1.2, wherein the average effective radius of the first catching contour is an average of the distances of the contact points between the first catching element (10) and the first catching contour (11) relative to the longitudinal axis (3) of the selector shaft (2) which may occur in different axial positions of the selector shaft (2), and wherein the average effective radius of the second catching contour is an average of the distances of contact points between the second catching element (20) and the second catching contour (21) to the longitudinal axis (3) of the selector shaft (2) which may occur in different positions of the selector shaft (2) in circumferential direction.

2. Shifting device (1) according to claim 1, **characterised in that** the quotient is greater than 2.

3. Shifting device (1) according to claim 1 or 2, **characterised in that** the second catching contour (21) is arranged to be stationary.

4. Shifting device (1) according to any of claims 1 to 3, **characterised in that** the first catching contour (10) moves with the selector shaft (2) at least in axial direction.

5. Shifting device (1) according to any of claims 1 to 4, **characterised in that** the first force acting on the first catching element (10) and the second force acting on the second catching element (20) are positioned in a plane extending perpendicular to the longitudinal axis (3).

6. Shifting device (1) according to any of claims 1 to 5, **characterised in that** the first reaction force and the second reaction force are offset in circumferential direction and act on the selector shaft with an included circumferential angle of 160 to 180 degrees.

7. Shifting device (1) according to any of claims 1 to 6, **characterised in that** by means of an axial displacement of the selector shaft (2) a shifting gate can be selected and by means of a rotation a gear of the gearbox can be engaged.

8. Shifting device (1) according to any of claims 1 to 7, **characterised in that** the selector shaft (2) is designed as a tubular body which surrounds an inner shaft (4).

9. Shifting device (1) according to claim 8, **characterised in that** the inner shaft (4) has a driver (5), which is positioned essentially without play in circumferential direction in a recess of the tubular body and is arranged to be movable in axial direction.

## Revendications

1. Dispositif de commutation (1) pour un engrenage, comprenant
- un arbre de commutation (2) avec un axe longitudinal (3), dans lequel l'arbre de commutation (2) peut être déplacé le long de l'axe longitudinal (3) dans le sens axial et peut être tourné autour de l'axe longitudinal (3) dans le sens périphérique,
- un premier élément d'encliquetage (10) et un premier contour d'encliquetage (11), dans lequel une première force presse le premier élément d'encliquetage (10) contre le premier contour d'encliquetage (11) et ainsi l'arbre de commutation (2) est maintenu dans au moins une position d'encliquetage axiale,
- un second élément d'encliquetage (20) et un second contour d'encliquetage (21), dans lequel une seconde force presse le second élément d'encliquetage (20) contre le second contour d'encliquetage (21) et ainsi l'arbre de commutation (2) est maintenu dans au moins une position d'encliquetage dans le sens périphérique,
dans lequel la première force provoque une première force de réaction agissant sur l'arbre de commutation (2) et la seconde force provoque une seconde force de réaction agissant sur l'arbre de commutation (2), dans lequel la première force de réaction et la seconde force de réaction s'annulent au moins partiellement dans le sens radial,
**caractérisé en ce qu'**un quotient d'un rayon actif médian du second contour d'encliquetage (21) et d'un rayon actif médian du premier contour d'encliquetage (11) est inférieur à 0,8 ou supérieur à 1,2, dans lesquels le rayon actif médian du premier contour d'encliquetage constitue une valeur médiane des distances des points de contact entre le premier élément d'encliquetage (10) et le premier contour d'encliquetage (11), par rapport à l'axe longitudinal (3) de l'arbre de commutation (2), qui peuvent résulter pour des positions axiales différentes de l'arbre de commutation (2), et dans lequel le rayon actif médian du second contour d'encliquetage constitue une valeur médiane des distances des points de contact entre le second élément d'encliquetage (20) et le second contour d'encliquetage (21), par rapport à l'axe longitudinal (3) de l'arbre de commutation (2), qui peuvent résulter pour des positions différentes de l'arbre de commutation (2) dans le sens périphérique.

2. Dispositif de commutation (1) selon la revendication 1, **caractérisé en ce que** le quotient est supérieur à 2.

3. Dispositif de commutation (1) selon la revendication 1 ou 2, **caractérisé en ce que** le second contour d'encliquetage (21) est agencé fixement.

4. Dispositif de commutation (1) selon l'une quelconque des revendications 1 à 3, **caractérisé en ce que** le premier contour d'encliquetage (10) se déplace au moins dans le sens axial avec l'arbre de commutation (2).

5. Dispositif de commutation (1) selon l'une quelconque des revendications 1 à 4, **caractérisé en ce que** la première force agissant sur le premier élément d'encliquetage (10) et la seconde force agissant sur le second élément d'encliquetage (20) se trouvent dans un plan s'étendant perpendiculairement à l'axe longitudinal (3).

6. Dispositif de commutation (1) selon l'une quelconque des revendications 1 à 5, **caractérisé en ce que** la première force de réaction et la seconde force de réaction sont décalées dans le sens périphérique et agissent avec un angle périphérique inclus de 160 à 180 degrés sur l'arbre de commutation.

7. Dispositif de commutation (1) selon l'une quelconque des revendications 1 à 6, **caractérisé en ce qu'**une voie de commutation peut être sélectionnée par un déplacement axial de l'arbre de commutation (2) et une vitesse d'engrenage peut être introduite par une rotation.

8. Dispositif de commutation (1) selon l'une quelconque des revendications 1 à 7, **caractérisé en ce que** l'arbre de commutation (2) est réalisé en tant que corps tubulaire qui entoure un arbre intérieur (4).

9. Dispositif de commutation (1) selon la revendication 8, **caractérisé en ce que** l'arbre intérieur (4) présente un entraîneur (5) qui loge sensiblement sans jeu dans un évidement du corps tubulaire dans le sens périphérique et est agencé de manière mobile dans le sens axial.
